# EUROPEAN PATENT APPLICATION

(11) **EP 4 807 400 A1**
(43) Date of publication of application: **16.09.2026**
(21) Application number: 25382245.6
(22) Date of filing: 14.03.2025
(51) Int. Cl.: G01S 19/20

(54) **COMPUTER IMPLEMENTED METHOD FOR COMPUTING A PROTECTION LEVEL AND DEVICE THEREOF**

(71) Applicant: GMV AEROSPACE AND DEFENCE, S.A.U., 28760 Tres Cantos (ES)
(72) Inventor: AZAOLA SÁENZ, Miguel, Tres Cantos (ES); MORENO LÓPEZ, Ginés, Tres Cantos (ES)
(74) Representative: Elion IP, S.L.

(57) **Abstract**

The disclosure relates to a computer implemented method (100) for computing a protection level *PL* of a state estimate *x_{c}*, the method comprising using the information provided by several positioning sources *S*₁, *S*₂, ... , *Sₙ.*

The advantage of the present disclosure with respect to prior methods is that, by using the information contained in the estimation residuals from each positioning source, the computed protection level is smaller than the protection level that would have been obtained by using the position estimate of each positioning source directly.

## Description

### TECHNICAL FIELD

The present disclosure is applicable in any field in which a linear estimation method is used for determining or estimating the state of a physical system. Particularly, this method finds especial application in the field of satellite-based navigation (Global Navigation Satellite Systems or GNSS) where a position and other parameters (such as clock parameters) that define the state of a GNSS receiver are estimated using techniques that involve the linearisation of a set of equations, known as the GNSS observation equations. The proposed method is suitable in a wide variety of applications such as aircraft navigation, approach and landing operations, railway signalling, automotive autonomous driving, among others.

### BACKGROUND

As just stated, the present disclosure is applicable to any field of science and engineering in which linear estimation techniques are used, such as radar systems, signal processing, computer vision, orbit determination, spacecraft attitude determination and many others. The present disclosure is of particular interest in applications where the estimation error needs to be bounded with great confidence, which is usually the case of safety-critical applications such as those found in the aviation domain, autonomous vehicles (cars, vessels...), railway signalling systems etc. These applications often use the concept of Protection Level, *PL,* which intends to provide such a bound (up to certain level of confidence previously established) to the estimation errors of the linear estimation technique.

Most positioning devices use GNSS as the primary source. Yet, GNSS faces significant challenges in urban environments, particularly in dense cityscapes known as urban canyons. Tall buildings and other structures obstruct satellite signals, causing signal blockage, attenuation, and/or multipath interference, which in the end can result in misplacing the position solution by several meters. Multipath occurs when signals reflect off surfaces like glass or concrete, leading to erroneous positioning due to delayed signal reception. Additionally, the reduced number of visible satellites in these environments weakens the system's ability to triangulate an accurate position, resulting in degraded accuracy, inconsistencies, or complete loss of service. This issue is particularly problematic for applications that rely on precise navigation, such as autonomous vehicles, or emergency response systems.

One of the consequences of the above, is that the protection level *PL* resulting from the GNSS position solution is too big to be useful in some applications.

### SUMMARY

In order to overcome the above problems, the present disclosure proposes a method for computing a protection level *PL* which uses information provided by several positioning sources in such a way as to minimize the size of the protection level *PL.*

This disclosure presents a method for computing a protection level with improved performance, resulting in a better (smaller) protection level.

The present disclosure relates to a computer implemented method for computing a protection level *PL* of a combined state estimate *x_{c}.* As part of the method, the following are received as input to the method for each positioning source *Sₖ* of at least two or more positioning sources *S*₁, *S*₂, ... , *Sₙ*:
- an estimated user state vector *xₖ*;
- a vector of measurement residuals *rₖ*;
- an observation matrix *Hₖ;*
- a measurement error covariance matrix *Cₖ*.

The estimated user state vector *xₖ* contains a user position estimate *pₖ* and may also contain ancillary parameters *bₖ*, such as, clock bias parameters in the case of GNSS. The position estimate *pₖ* typically comprises three coordinates; the ancillary parameters *bₖ* may comprise as many parameters as needed by the positioning source *Sₖ* to estimate the user position. The estimated user state vector *xₖ* can be expressed as follows: ${x}_{k} = \left(\begin{matrix}{p}_{k} \\ {b}_{k}\end{matrix}\right)$

The vector of measurement residuals *rₖ* has a dimension which is equal to the number of raw measurements used by the positioning source *Sₖ* when computing the estimated user state vector *xₖ*.

The observation matrix *Hₖ* comprises at least a positional part *H_{p,k}* and which may also contain a submatrix *H_{b,k}* associated with the ancillary parameters. This observation matrix *Hₖ* comprises partial derivatives of the measurements with respect to the state variables, and can be expressed as follows: ${H}_{k} = \left({H}_{p , k} {H}_{b , k}\right)$

The measurement error covariance matrix *Cₖ* refers to the raw measurements used by each positioning source *Sₖ* when computing the estimated user state vector *xₖ*.

According to a first aspect of the present disclosure, the computer implemented method for computing a protection level *PL* of a state estimate *x_{c}* comprises:
- selecting an initial guess *p*₀ of the user position;
- building a combined state initial guess *x₀* as follows: ${x}_{0} = \left(\begin{matrix}{p}_{0} \\ {b}_{1} \\ {b}_{2} \\ ⋮ \\ {b}_{n}\end{matrix}\right)$
- building a combined vector of a *priori* residuals *r̂* as follows: $\hat{r} = \left(\begin{matrix}{\hat{r}}_{1} \\ {\hat{r}}_{2} \\ ⋮ \\ {\hat{r}}_{n}\end{matrix}\right)$ wherein, for each *k =* 1,2, *... , n*: ${\hat{r}}_{k} = {r}_{k} + {H}_{p , k} ⋅ \left({p}_{k}-{p}_{0}\right)$
- building a combined observation matrix *H* as follows: $H = \left(\begin{matrix}{H}_{p , 1} & {H}_{b , 1} & 0 & ⋯ & 0 \\ {H}_{p , 2} & 0 & {H}_{b , 2} & ⋯ & 0 \\ ⋮ & ⋮ & ⋮ & ⋱ & ⋮ \\ {H}_{p , N} & 0 & 0 & ⋯ & {H}_{b , n}\end{matrix}\right)$
- building a combined covariance matrix *C* as follows: $C = \left(\begin{matrix}{C}_{1} & 0 & ⋯ & 0 \\ 0 & {C}_{2} & ⋯ & 0 \\ ⋮ & ⋮ & ⋱ & ⋮ \\ 0 & 0 & ⋯ & {C}_{n}\end{matrix}\right)$
- building a weighting matrix *W* as follows: $W = {C}^{- 1}$
- building a state innovation vector *Δx* as follows: $Δ x = {\left({H}^{t}WH\right)}^{- 1} {H}^{t} W \hat{r}$
- computing the combined state estimate *x_{c}* as follows: ${x}_{c} = {x}_{0} + Δ x ;$
- construct a combined vector of a *posteriori* residuals *r_{c}* as follows: ${r}_{c} = \hat{r} - H ⋅ Δ x$ and,
- computing the protection level *PL* for the combined state estimate *x_{c}* using the combined observation matrix *H,* the combined vector of a posteriori residuals *r_{c}* and the weighting matrix *W.*

Thus, the disclosed method makes use of several positioning sources and provides a combined state estimate *x_{c},* and also providing integrity to that combined state estimate by means of the computed protection level *PL.* This combined state estimate *x_{c}* and computed protection level *PL* take advantage of all the information encoded in the raw measurements of each positioning source *Sₖ* (each providing their own raw measurements), and not just the information encoded in the state vectors. That is, the degrees of freedom for estimating the state vector are increased (degrees of freedom in the sense of having additional parameters for estimating the same number of unknowns in the state vector), which results in an improved computed protection level *PL,* since the computed protection level *PL* is smaller (than the protection level *PL* that could be obtained by using the information encoded in the state vectors), while still keeping integrity.

In a typical use case, the computed protection level *PL* is compared against a threshold value so as to make a decision regarding the reliability of the provided position solution. Specifically, if the protection level *PL* is above the threshold value, the provided position solution is not considered safe, and an alarm is typically raised.

The last step of the proposed method comprises computing the protection level *PL* for the combined state estimate *x_{c}.* This protection level *PL* can be computed using the combined observation matrix *H,* the combined vector of a posteriori residuals *r_{c}* and the weighting matrix W as disclosed in European patent EP2113786B1.

The positioning sources *S*₁*,S*₂*, ... ,Sₙ* can be any of GNSS positioning, terrestrial 5G/6G positioning, satellite-based 5G/6G positioning, LEO-PNT positioning, LEO positioning based on signals of opportunity, R-mode positioning or combinations thereof, It should be noted that the previous list is not exhaustive, and other positioning sources could be used, as long as the positioning source provides the required inputs.

In certain embodiments, at least one of the positioning sources *S*₁, *S*₂, ..., *Sₙ* is GNSS, and at least one of the positioning sources *S*₁*,S*₂*,* ... , *Sₙ* is different from GNSS.

Considering the increasing deployment of LEO satellites, having the position solution provided by LEO can be advantageous in urban environments, especially in urban canyons, since LEO satellites have significantly reduced signal delay, low latency, high data transfer speeds, and provide very good coverage.

In other cases, in environments where many terrestrial 5G/6G nodes exist, using the position solution provided by these terrestrial 5G/6G nodes can be convenient.

It should be noted that the above notation of the observation matrix *Hₖ* and of the combined observation matrix *H* has considered that all of the positioning sources *S*₁*, S*₂*,* ..., *Sₙ* also provide ancillary parameters. If, for instance, the state vector of the positioning source *S*₁ does not comprise ancillary parameters, the observation matrix *H*₁ is expressed as follows: ${H}_{1} = {H}_{p , 1}$ and the combined observation matrix H is expressed as follows, assuming that the rest of positioning sources *S*₂, ... , *Sₙ* do provide ancillary parameters *b₂, ... , bₙ* in addition to their respective positions *p₂, ... , pₙ*: $H = \left(\begin{matrix}{H}_{p , 1} & 0 & ⋯ & 0 \\ {H}_{p , 2} & {H}_{b , 2} & ⋯ & 0 \\ ⋮ & ⋮ & ⋱ & ⋮ \\ {H}_{p , N} & 0 & ⋯ & {H}_{b , n}\end{matrix}\right)$

There are several possibilities for selecting the initial guess *p*₀ of the user position.

This initial guess *p₀* can be arbitrarily selected in the vicinity of at least one of the position estimates provided by one of the positioning sources *S*₁*, S*₂, *... ,Sₙ..* That is, this arbitrary selection should make sure that the initial guess *p*₀ is sufficiently close to (or not too far away from) one of the position estimates provided by one of the positioning sources *S*₁*, S*₂*,* ..., *Sₙ* to avoid convergence issues.

In certain embodiments, the initial guess *p*₀ is obtained as an average of two or more of the position estimates *p₁, p₂,* ..., *pₙ* from the several positioning sources *S*₁, *S*₂, ... , *Sₙ*. Using an average of two or more of the position estimates provides a more reliable and accurate result compared to relying on a single position estimate. Individual estimations can be influenced by random errors, biases, or variations in judgment, leading to inconsistencies.

The initial guess *p₀* can also be obtained as the position estimate of one positioning source *Sₖ* of the several positioning sources *S*₁*,S*₂*,* ... , *Sₙ*. For instance, the initial guess *p*₀ can be selected to be the position estimate of the GNSS source, since GNSS is likely to be the primary positioning source.

It should be noted that throughout the present disclosure, the term state vector is used to refer to a vector describing the state of a physical system. The term state estimate is used to refer to any state vector obtained by means of an estimation process. The actual state of the physical system (otherwise referred to as the user state or user state vector), is what the estimation process is aimed at computing to the best possible accuracy. For example, when the physical system is a GNSS positioning device, its state vector is typically described by a vector comprising three spatial coordinates (associated to the position in space of the GNSS device) and one or more so-called clock parameters describing the state of the GNSS device's internal clock.

It should be noted that the protection level *PL* may relate to all spatial components of the state vector or to only a subset of them. For instance, the protection level *PL* can be computed as a bound for only a subset of the spatial coordinates, such as the horizontal coordinates, or the vertical coordinates.

A further aspect of the present disclosure relates to a device which comprises a processor configured for carrying out the method for computing protection levels as defined in the foregoing.

A further aspect of the present disclosure relates to a device comprising at least one processor and at least one memory module, the at least one processor and the at least one memory module being configured to:
- receive as input for each positioning source *Sₖ* of at least two or more positioning sources *S*₁*, S*₂*,* ... , *Sₙ* the following:
   - an estimated user state vector *xₖ*, which contains a user position estimate *pₖ* and which may also contain ancillary parameters *bₖ*;
   - a vector of measurement residuals *rₖ*;
   - an observation matrix *Hₖ* which comprises at least a positional part *H_{p,k}* and which may also contain a submatrix *H_{b,k}* associated with the ancillary parameters *bₖ*;
   - a measurement error covariance matrix *Cₖ*;
- select an initial guess *p*₀ of the user position;
- build a combined state initial guess *x₀* as follows: ${x}_{0} = \left(\begin{matrix}{p}_{0} \\ {b}_{1} \\ {b}_{2} \\ ⋮ \\ {b}_{n}\end{matrix}\right)$
- build a combined vector of a *priori* residuals *r̂* as follows: $\hat{r} = \left(\begin{matrix}{\hat{r}}_{1} \\ {\hat{r}}_{2} \\ ⋮ \\ {\hat{r}}_{n}\end{matrix}\right)$ wherein, for each *k =* 1,2, *... , n*:${\hat{r}}_{k} = {r}_{k} + {H}_{p , k} ⋅ \left({p}_{k}-{p}_{0}\right)$
- build a combined observation matrix *H* as follows: $H = \left(\begin{matrix}{H}_{p , 1} & {H}_{b , 1} & 0 & ⋯ & 0 \\ {H}_{p , 2} & 0 & {H}_{b , 2} & ⋯ & 0 \\ ⋮ & ⋮ & ⋮ & ⋱ & ⋮ \\ {H}_{p , N} & 0 & 0 & ⋯ & {H}_{b , n}\end{matrix}\right)$
- build a combined covariance matrix *C* as follows: $C = \left(\begin{matrix}{C}_{1} & 0 & ⋯ & 0 \\ 0 & {C}_{2} & ⋯ & 0 \\ ⋮ & ⋮ & ⋱ & ⋮ \\ 0 & 0 & ⋯ & {C}_{n}\end{matrix}\right)$
- build a weighting matrix *W* as follows: $W = {C}^{- 1}$
- build a state innovation vector Δ*x* as follows: $Δ x = {\left({H}^{t}WH\right)}^{- 1} {H}^{t} W \hat{r}$
- compute the combined state estimate *x_{c}* as follows: ${x}_{c} = {x}_{0} + Δ x ;$
- construct a combined vector of a *posteriori* residuals *r_{c}* as follows: ${r}_{c} = \hat{r} - H ⋅ Δ x$ and,
- compute the protection level *PL* for the combined state estimate *x_{c}* using the combined observation matrix *H,* the combined vector of a *posteriori* residuals *r_{c}* and the weighting matrix *W.*

In certain embodiments, the processor is further configured to compare the computed protection level *PL* against a preestablished threshold value, and in response, to take some action. As way of example, an alarm is raised if the computed protection level *PL* is above the preestablished threshold. The alarm can be in the form of a sound, a visual indication, a vibration, etc.

The method can be run in one or more devices in an isolated manner and/or in a distributed manner. That is to say, one, some or all steps may be run by a same processing device, or one or some steps may be run by one processing device and some other step or steps may be run by one or more other processing devices or even be run in distributed manner, which means that several processing devices cooperate to run one or more steps. In this sense, the steps are digitally run.

The method and device proposed herein are especially suitable for urban canyons, where GNSS performance is known to be poor. In these applications, the present disclosure provides an improved protection level *PL* which takes into account one or more other sources of positioning, thereby providing redundancy.

The different aspects and embodiments defined in the foregoing may be combined with one another, as long as they are compatible with each other.

Additional advantages and features of the present disclosure will become apparent from the detailed description that follows and will be particularly pointed out in the appended claims.

### BRIEF DESCRIPTION OF THE DRAWINGS

To complete the description and in order to provide for a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings comprise the following figures:
Figure 1 shows a flow diagram of a method for computing a protection level *PL* of a combined state estimate *x_{c}.*
Figure 2 shows a block diagram of a positioning device which includes a processor for at least executing the method for computing a combined state estimate *x_{c}* and a protection level *PL.*
Figure 3 shows a block diagram of another positioning device which also includes a processor for at least executing the method for computing a combined state estimate *x_{c}* and a protection level *PL.*

### DETAILED DESCRIPTION

The following description is not to be taken in a limiting sense but is given solely for the purpose of describing the broad principles of the present disclosure. Embodiments thereof will be described by way of example, with reference to the above-mentioned drawings.

In the example that follows, it is assumed that *n* different positioning sources *S*₁, *S*₂ *... , Sₙ,* are available. And each positioning source *Sₖ* (*k* = 1,2, *..., n*), regardless of their nature, provides a user position estimate expressed in the same reference frame. Each positioning source uses their own observables and undergoes some linearisation process resulting in an observation matrix, formed by the partial derivatives of the observables.

Each positioning source *Sₖ* may require estimating some additional parameters of its own along with the position estimation. These additional parameters are referred to as ancillary parameters, and are associated with each positioning source. For instance, to obtain a GNSS position estimate, it is typically necessary to estimate one or more clock bias parameters. These clock bias parameters are the GNSS ancillary parameters. They relate to the way GNSS measurements are obtained. Other positioning sources may have their own clocks, or maybe some other parameters, which are inherent to their measurement process and need to be estimated along with the position. These additional ancillary parameters should be made available by each positioning source along with their position estimate.

Thus, assuming the *n* different positioning sources *S*₁, *S*₂ ... , *Sₙ*, from each positioning source *Sₖ* (*k* = 1,2, *... , n*) the following are provided as input to the method (step S0):
- An estimated user state vector *xₖ*, containing the user position estimate along with any ancillary parameters (e.g., clock bias parameters in the case of GNSS). That is: ${x}_{k} = \left(\begin{matrix}{p}_{k} \\ {b}_{k}\end{matrix}\right)$
- A vector of measurement residuals *rₖ*.
- An observation matrix *Hₖ* (also referred to in literature as geometry matrix or design matrix), which comprises partial derivatives of the measurements with respect to the user state vector variables. Each observation matrix *Hₖ* comprises two parts, one referring to the position and another one referring to the ancillary parameters, that is: ${H}_{k} = \left({H}_{p , k} {H}_{b , k}\right)$
- A measurement error covariance matrix *Cₖ*, which refers to the measurements used to estimate *xₖ*.

In the method of the present disclosure, a new position solution is going to be obtained. Each positioning source *Sₖ* provides their own position solution, and a new position estimate is computed considering the different positioning sources.

The proposed method essentially comprises the following two steps:
- Firstly, a new state estimate is computed taking into account the information provided by each positioning source *Sₖ*. This new estimate is referred to as combined state estimate *x_{c}.*
- Then, a protection level *PL* is computed for the combined state estimate *x_{c}.*

The first main step can be developed as indicated in the following steps S1.1-S1.9.

Step S1.1: an initial guess *p₀* of the user position is obtained. This initial guess *p*₀ can be obtained in many ways.

By way of example, the initial guess *p*₀ can be computed as an average of two or more of the position estimates *p*₁, *p*₂, ... , *pₙ* coming from the different positioning sources *S*₁, *S*₂ *... , Sₙ.*

By way of another example, the initial guess *p*₀ can be selected to be one estimate from one positioning source *Sₖ*, such as the position solution provided by a GNSS positioning source.

This initial guess *p₀* can be arbitrarily selected as long as it is not far away from any of the estimates *p*₁, *p*₂, ... , *pₙ,* which, therefore, should be close to each other too.

It is also possible that this initial guess *p*₀ is provided as input.

It is assumed that the observation matrices of the different positioning sources *S*₁, *S*₂ *... , Sₙ* are not too sensitive to slight changes of the user position, and thus, the input observation matrices *H₁, H₂, ..., Hₙ* are assumed to be still good observation matrices at the initial guess *p*₀: a change of a few meters in the position does not produce a substantial change in the observation matrix, and it is thus not necessary to change the observation matrix. This is typically the case with GNSS, as satellites are far away from the user, but it may not be the case for other positioning sources, where the ranging sources may be just tens of meters away. In such cases, it can be necessary to obtain new observation matrices (valid at the initial guess *p*₀).

In a step S1.2 a combined state initial guess *x*₀ is built as follows: ${x}_{0} = \left(\begin{matrix}{p}_{0} \\ {b}_{1} \\ {b}_{2} \\ ⋮ \\ {b}_{n}\end{matrix}\right)$

Note that this combined state initial guess *x*₀ comprises one position, the initial guess *p*₀, plus the ancillary parameters *b*₁, *b*₂ *... , bₙ,* from the different positioning sources.

In step S1.3 a combined vector of a *priori* residuals *r̂* is built as follows: $\hat{r} = \left(\begin{matrix}{\hat{r}}_{1} \\ {\hat{r}}_{2} \\ ⋮ \\ {\hat{r}}_{n}\end{matrix}\right)$ wherein, for each *k =* 1,2, *... , n*:${\hat{r}}_{k} = {r}_{k} + {H}_{p , k} ⋅ \left({p}_{k}-{p}_{0}\right)$

That is, the vector of measurement residuals *rₖ* for each positioning source *Sₖ* are re-computed considering the change of working position to the initial guess *p*₀.

In step S1.4 a combined observation matrix H is constructed as follows: $H = \left(\begin{matrix}{H}_{p , 1} & {H}_{b , 1} & 0 & ⋯ & 0 \\ {H}_{p , 2} & 0 & {H}_{b , 2} & ⋯ & 0 \\ ⋮ & ⋮ & ⋮ & ⋱ & ⋮ \\ {H}_{p , N} & 0 & 0 & ⋯ & {H}_{b , n}\end{matrix}\right)$

In step S1.5 a combined covariance matrix C as constructed as follows: $C = \left(\begin{matrix}{C}_{1} & 0 & ⋯ & 0 \\ 0 & {C}_{2} & ⋯ & 0 \\ ⋮ & ⋮ & ⋱ & ⋮ \\ 0 & 0 & ⋯ & {C}_{n}\end{matrix}\right)$

In step S1.6 a weighting matrix W is computed as follows: $W = {C}^{- 1}$

In step S1.7 a state innovation vector *Δx* is built as follows: $Δ x = {\left({H}^{t}WH\right)}^{- 1} {H}^{t} W \hat{r}$

In step S1.8 a combined state estimate *x_{c}* is computed as follows: ${x}_{c} = {x}_{0} + Δ x$

The combined state estimate *x_{c}* has the same structure as the combined state initial guess *x*₀: ${x}_{c} = \left(\begin{matrix}p \\ {b}_{1}^{′} \\ {b}_{2}^{′} \\ ⋮ \\ {b}_{n}^{′}\end{matrix}\right)$

In step S1.9 a combined vector of a *posteriori* residuals *r_{c}* is computed as follows: ${r}_{c} = \hat{r} - H ⋅ Δ x$

It is to be noted that the combined observation matrix *H* and the combined vector of *a posteriori* residuals *r_{c}* have a dimension which is equal to the sum of all raw measurements used by the respective positioning source *Sₖ* when computed their estimated user state vector *xₖ*.

In the second main step of the method (step S2), the protection level *PL* for the combined state estimate *x_{c}* is computed using the combined observation matrix *H,* the combined vector of a posteriori residuals *r_{c}* and the weighting matrix *W.* The protection level *PL* can be computed, for instance, as disclosed in European patent EP2113786B1.

For the computation of the protection level *PL,* there is a number of degrees of freedom which is the number of measurements (equal to the dimension or size of the combined vector of *a posteriori* residuals *r_{c}*) minus the number of state parameters (equal to the size of the combined state estimate *x_{c}*).

The resulting protection levels are referred to the position estimate p resulting from the previous step.

### Example

A first positioning source *S*₁ is a dual constellation GNSS solution with six measurements, three measurements provided by a first constellation (say Galileo) and three measurements provided by a second constellation (say GPS). The ancillary parameters *b*₁ are two clock biases, one per constellation. The following information is provided by this first positioning source *S*₁:
- an observation matrix *H*₁: ${H}_{1} = \left({H}_{p , 1} {H}_{b , 1}\right) = \left(\begin{matrix}0.211 & - 0.946 & - 0.246 & 1 & 0 \\ - 0.093 & - 0.412 & - 0.906 & 1 & 0 \\ 0.912 & 0.371 & - 0.174 & 1 & 0 \\ 0.486 & - 0.056 & - 0.872 & 0 & 1 \\ 0.126 & 0.119 & - 0.985 & 0 & 1 \\ - 0.884 & - 0.121 & - 0.451 & 0 & 1\end{matrix}\right)$
- a measurement error covariance matrix C₁: ${C}_{1} = \left(\begin{matrix}1.995 & 0.044 & 0.762 & 0.589 & 2.171 & - 0.990 \\ 0.044 & 1.109 & - 0.952 & 0.096 & - 0.138 & 0.827 \\ 0.762 & - 0.952 & 4.542 & - 1.893 & - 0.050 & - 0.540 \\ 0.589 & 0.096 & - 1.893 & 4.485 & - 0.368 & - 3.449 \\ 2.171 & - 0.138 & - 0.050 & - 0.368 & 4.358 & - 1.316 \\ - 0.990 & 0.827 & - 0.540 & - 3.449 & - 1.316 & 6.621\end{matrix}\right)$
- an estimated user state vector x₁: ${p}_{1} = \left(\begin{matrix}0.387 \\ 0.000 \\ 2.413\end{matrix}\right) ; {b}_{1} = \left(\begin{matrix}1.209 \\ 2.311\end{matrix}\right) ; {x}_{1} = \left(\begin{matrix}{p}_{1} \\ {b}_{1}\end{matrix}\right) = \left(\begin{matrix}0.387 \\ 0.000 \\ 2.413 \\ 1.209 \\ 2.311\end{matrix}\right)$
- a vector of measurement residuals *r*₁: ${r}_{1} = \left(\begin{matrix}- 0.437 \\ 0.119 \\ - 0.348 \\ 0.524 \\ - 0.982 \\ 0.086\end{matrix}\right)$

A second position source *S*₂ is a 5G/6G solution based on five measurements with ancillary parameters *b*₂ consisting of one clock bias. The following is provided by this second positioning source *S*₂
- an observation matrix H₂: ${H}_{2} = \left({H}_{p , 2} {H}_{b , 2}\right) = \left(\begin{matrix}0.780 & - 0.467 & - 0.416 & 1 \\ - 0.249 & 0.958 & - 0.144 & 1 \\ - 0.641 & - 0.027 & - 0.767 & 1 \\ - 0.002 & - 0.066 & - 0.998 & 1 \\ 0.096 & 0.476 & - 0.874 & 1\end{matrix}\right)$
- a measurement error covariance matrix *C*₂: ${C}_{2} = \left(\begin{matrix}5.854 & 1.126 & - 1.058 & 0.680 & 0.978 \\ 1.126 & 7.433 & 4.774 & - 1.622 & 4.528 \\ - 1.058 & 4.774 & 4.548 & - 0.928 & 3.338 \\ 0.680 & - 1.622 & - 0.928 & 1.101 & - 1.690 \\ 0.978 & 4.528 & 3.338 & - 1.690 & 6.553\end{matrix}\right)$
- an estimated user state vector *x*₂: ${p}_{2} = \left(\begin{matrix}0.916 \\ 5.228 \\ - 2.479\end{matrix}\right) ; {b}_{2} = - 0.672 ; {x}_{2} = \left(\begin{matrix}{p}_{2} \\ {b}_{2}\end{matrix}\right) = \left(\begin{matrix}0.916 \\ 5.228 \\ - 2.479 \\ - 0.672\end{matrix}\right)$
- a vector of measurement residuals *r*₂: ${r}_{2} = \left(\begin{matrix}- 0.078 \\ - 2.476 \\ - 1.886 \\ 1.094 \\ - 3.454\end{matrix}\right)$

Based on the above inputs, the proposed method computes the combined observation matrix *H* (step S1.4): $H = \left(\begin{matrix}{H}_{p , 1} & {H}_{b , 1} & 0 \\ {H}_{p , 2} & 0 & {H}_{b , 2}\end{matrix}\right) = \left(\begin{matrix}0.211 & - 0.946 & - 0.246 & 1 & 0 & 0 \\ - 0.093 & - 0.412 & - 0.906 & 1 & 0 & 0 \\ 0.912 & 0.371 & - 0.174 & 1 & 0 & 0 \\ 0.486 & - 0.056 & - 0.872 & 0 & 1 & 0 \\ 0.126 & 0.119 & - 0.985 & 0 & 1 & 0 \\ - 0.884 & - 0.121 & - 0.451 & 0 & 1 & 0 \\ 0.780 & - 0.467 & - 0.416 & 0 & 0 & 1 \\ - 0.249 & 0.958 & - 0.144 & 0 & 0 & 1 \\ - 0.641 & - 0.027 & - 0.767 & 0 & 0 & 1 \\ - 0.002 & - 0.066 & - 0.998 & 0 & 0 & 1 \\ 0.096 & 0.476 & - 0.874 & 0 & 0 & 1\end{matrix}\right)$

And the combined covariance matrix C (step S1.5): $\begin{matrix}C = \left(\begin{matrix}{C}_{1} & 0 \\ 0 & {C}_{2}\end{matrix}\right) = \\ \left(\begin{matrix}1.995 & 0.044 & 0.762 & 0.589 & 2.171 & - 0.990 & 0 & 0 & 0 & 0 & 0 \\ 0.044 & 1.109 & - 0.952 & 0.096 & - 0.138 & 0.827 & 0 & 0 & 0 & 0 & 0 \\ 0.762 & - 0.952 & 4.542 & - 1.893 & - 0.050 & - 0.540 & 0 & 0 & 0 & 0 & 0 \\ 0.589 & 0.096 & - 1.893 & 4.485 & - 0.368 & - 3.449 & 0 & 0 & 0 & 0 & 0 \\ 2.171 & - 0.138 & - 0.050 & - 0.368 & 4.358 & - 1.316 & 0 & 0 & 0 & 0 & 0 \\ - 0.990 & 0.827 & - 0.540 & - 3.449 & - 1.316 & 6.621 & 0 & 0 & 0 & 0 & 0 \\ 0 & 0 & 0 & 0 & 0 & 0 & 5.854 & 1.126 & - 1.058 & 0.680 & 0.978 \\ 0 & 0 & 0 & 0 & 0 & 0 & 1.126 & 7.433 & 4.774 & - 1.622 & 4.528 \\ 0 & 0 & 0 & 0 & 0 & 0 & - 1.058 & 4.774 & 4.548 & - 0.928 & 3.338 \\ 0 & 0 & 0 & 0 & 0 & 0 & 0.680 & - 1.622 & - 0.928 & 1.101 & - 1.690 \\ 0 & 0 & 0 & 0 & 0 & 0 & 0.978 & 4.528 & 3.338 & - 1.690 & 6.553\end{matrix}\right)\end{matrix}$

The weighting matrix W is computed as follows (step S1.6): $W = {C}^{- 1}$

As initial guess *p*₀ the following is used (step S1.1): ${p}_{0} = \left(\begin{matrix}1.450 \\ 0.383 \\ 0.024\end{matrix}\right)$

In step S1.2 the combined state initial guess *x*₀ is built (step S1.2): ${x}_{0} = \left(\begin{matrix}{p}_{0} \\ {b}_{1} \\ {b}_{2}\end{matrix}\right) = \left(\begin{matrix}1.450 \\ 0.383 \\ 0.024 \\ 1.209 \\ 2.311 \\ - 0.672\end{matrix}\right)$

In step S1.3 the vector of measurement residuals *r̂*₁ and *r̂*₂f for each positioning source *S*₁, *S*₂ are re-computed considering the change of working position to the initial guess *p*₀: ${\hat{r}}_{1} = {r}_{1} + {H}_{p , 1} \left({p}_{1}-{p}_{0}\right) = \left(\begin{matrix}- 0.886 \\ - 1.789 \\ - 1.876 \\ - 2.055 \\ - 3.515 \\ - 0.005\end{matrix}\right)$ ${\hat{r}}_{2} = {r}_{2} + {H}_{p , 2} \left({p}_{2}-{p}_{0}\right) = \left(\begin{matrix}- 1.716 \\ 2.656 \\ 0.245 \\ 3.272 \\ 0.989\end{matrix}\right)$

And the combined vector of a *priori* residuals *r̂* is computed as follows: $\hat{r} = \left(\begin{matrix}{\hat{r}}_{1} \\ {\hat{r}}_{2}\end{matrix}\right) = \left(\begin{matrix}- 0.886 \\ - 1.789 \\ - 1.876 \\ - 2.055 \\ - 3.515 \\ - 0.005 \\ - 1.716 \\ 2.656 \\ 0.245 \\ 3.272 \\ 0.989\end{matrix}\right)$

The state innovation vector *Δx* is computed as follows (step S1.7): $Δ x = {\left({H}^{t}WH\right)}^{- 1} {H}^{t} W \hat{r} = \left(\begin{matrix}- 3.302 \\ 3.515 \\ 4.019 \\ 2.813 \\ - 0.117 \\ 6.586\end{matrix}\right)$

A combined state estimate *x_{c}* is computed as follows (step S1.8): ${x}_{c} = {x}_{0} + Δ x = \left(\begin{matrix}- 1.852 \\ 3.898 \\ 4.043 \\ 2.813 \\ - 0.117 \\ 6.586\end{matrix}\right)$

The combined vector of a *posteriori* residuals *r_{c}* is computed as follows (step S1.9): ${r}_{c} = \hat{r} - H ⋅ Δ x = \left(\begin{matrix}1.310 \\ 0.181 \\ - 2.285 \\ 3.370 \\ 0.559 \\ - 0.568 \\ - 2.411 \\ - 7.542 \\ - 5.281 \\ 0.921 \\ - 3.440\end{matrix}\right)$

The position solutions provided by the first positioning source *S*₁, GNSS, and the second positioning source *S*₂, the 5G/6G positioning solutions only had one [1] degree of freedom each: their estimated user state vectors *x*₁ and *x*₂ had five [5] and four [4] parameters, respectively, and the number of measurements were six [6] and five [5], respectively. With the proposed method, there are five [5] degrees of freedom, since there are six [6] parameters in the combined state estimate and there are eleven [11] measurements in total. If the position estimates *p₁* and *p*₂ had been used instead of using the vectors of residuals *r*₁ and *r*₂ and the state estimates *x*₁ and *x*₂(which, together, encode the information contained in the measurements originally used by the positioning sources *S*₁ and *S*₂) the resulting number of degrees of freedom would have been three [3] (six [6] measurements in the form of three [3] positional coordinates from each of the positioning sources, used to estimate a combined position, comprising three [3] coordinates). Therefore, by applying the method of the present disclosure, two extra degrees of freedom have been gained. Thus, the protection level *PL* is computed using more information, and the resulting protection level *PL* is smaller, while still maintaining the required integrity.

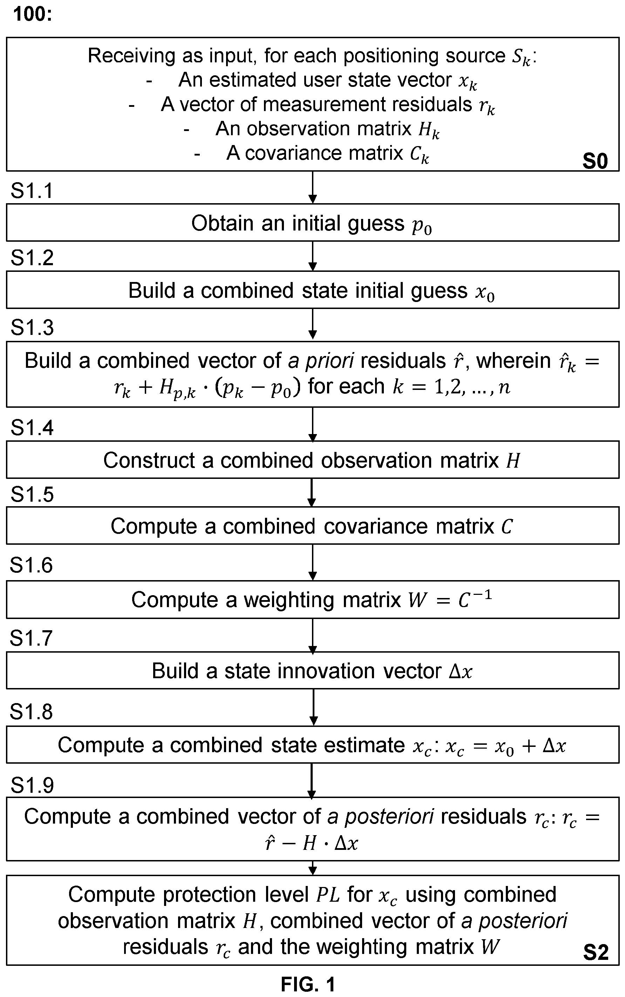

Figure 1 shows a flow diagram of the proposed method 100 for computing a protection level *PL* of a combined state estimate *x_{c},* comprising the steps S0, S1.1-S1.9 and S2.

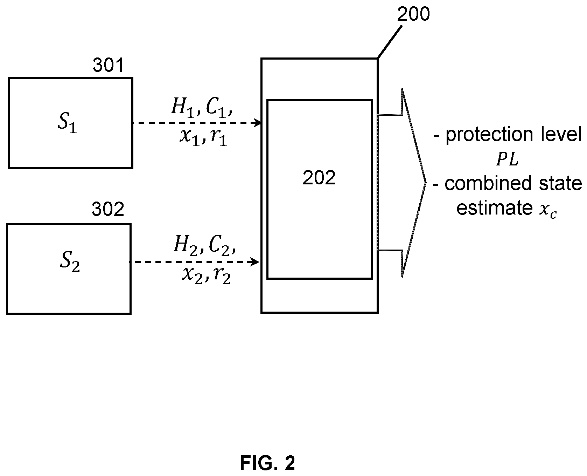

Figure 2 shows a block diagram of a device 200 consistent with some embodiments of the present disclosure.

In the example shown, the device 200 includes a processor 202. Although not shown, the position device 200 typically further includes a memory and a local clock.

The device 200 receives the following information from a first positioning source 301: a first estimated user state vector *x*₁, a first vector of measurement residuals *r*₁, a first observation matrix *H*₁ and a first measurement error covariance matrix *C*₁. And, from a second positioning source 302, the device 200 receives: a second estimated user state vector *x*₂, a second vector of measurement residuals *r*₂, a second observation matrix *H*₂ and a second measurement error covariance matrix *C*₂.

With the above inputs from the two positioning sources 301 and 302, the processor 202 is at least configured for executing the proposed method 100 and compute a combined state estimate *x_{c}* and a protection level *PL.*

Thus, the device 200 shown in Figure 2 receives the inputs for executing the method 100 from two or more positioning sources 301, 302, that are in this example implemented as external and separate devices and connected to the device 200.

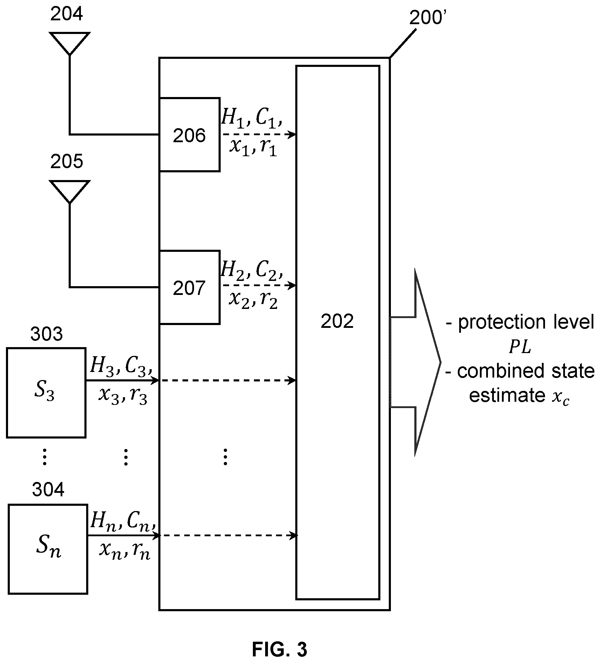

Figure 3 shows a block diagram of a device 200' consistent with some embodiments of the present disclosure.

As in the previous example, the device 200' includes a processor 202. Although not shown, the device 200' further includes a memory and a local clock.

The device 200' shown in Figure 3, comprises two antennas 204, 205, respectively coupled to a GNSS receiver 206 for receiving a GNSS signal and to a 5G/6G receiver 207, thereby constituting the first and second positioning sources *S*₁ and *S*₂. The processor 202, the GNSS receiver 206 and the 5G/6G receiver 207 are in this example implemented as separate processing units encased in the single device 200'.

Further, the device 200' is connected to other *n* - 2 positioning sources *S*₃, ... *Sₙ* (for ease of representation, only positioning sources 303 and 304 are depicted in Figure 3).

Each positioning source *Sₖ* provides the processor 202 with the following information: estimated user state vector *xₖ*, vector of measurement residuals *rₖ*, observation matrix *Hₖ* and measurement error covariance matrix *Cₖ.* With these inputs from each positioning source, the processor 202 is at least configured for executing the proposed method 100 and compute a combined state estimate *x_{c}* and a protection level *PL.*

In either configuration, the computed protection level *PL* of the combined state estimate *x_{c}* is compared against a preestablished threshold value, and in case the protection level is above this preestablished threshold value, the provided position solution is not considered safe, and an alarm is typically raised.

In this text, the term "includes", "comprises" and derivations thereof (such as "including", "comprising", etc.) should not be understood in an excluding sense. The disclosure is obviously not limited to the specific embodiment(s) described herein, but also encompasses any variations that may be considered by any person skilled in the art within the general scope of the invention as defined in the claims.

## Claims

1. A computer implemented method (100) for computing a protection level *PL* of a state estimate *x_{c};* the method comprising receiving as input for each positioning source *Sₖ* of at least two or more positioning sources *S*₁*, S*₂*,* ... , *Sₙ* the following:
- an estimated user state vector *xₖ*, which contains a user position estimate *pₖ* and which may also contain ancillary parameters *bₖ*;
- a vector of measurement residuals *rₖ*;
- an observation matrix *Hₖ* which comprises at least a positional part *H_{p,k}* and which may also contain a submatrix *H_{b,k}* associated with the ancillary parameters *bₖ*;
- a measurement error covariance matrix *Cₖ*;
wherein the method comprises:
- selecting an initial guess *p*₀ of the user position;
- building a combined state initial guess *x*₀ as follows: ${x}_{0} = \left(\begin{matrix}{p}_{0} \\ {b}_{1} \\ {b}_{2} \\ ⋮ \\ {b}_{n}\end{matrix}\right)$
- building a combined vector of a *priori* residuals *r̂* as follows: $\hat{r} = \left(\begin{matrix}{\hat{r}}_{1} \\ {\hat{r}}_{2} \\ ⋮ \\ {\hat{r}}_{n}\end{matrix}\right)$ wherein, for each *k =* 1,2, *... , n*: ${\hat{r}}_{k} = {r}_{k} + {H}_{p , k} ⋅ \left({p}_{k}-{p}_{0}\right)$
- building a combined observation matrix *H* as follows: $H = \left(\begin{matrix}{H}_{p , 1} & {H}_{b , 1} & 0 & ⋯ & 0 \\ {H}_{p , 2} & 0 & {H}_{b , 2} & ⋯ & 0 \\ ⋮ & ⋮ & ⋮ & ⋱ & ⋮ \\ {H}_{p , N} & 0 & 0 & ⋯ & {H}_{b , n}\end{matrix}\right)$
- building a combined covariance matrix *C* as follows: $C = \left(\begin{matrix}{C}_{1} & 0 & ⋯ & 0 \\ 0 & {C}_{2} & ⋯ & 0 \\ ⋮ & ⋮ & ⋱ & ⋮ \\ 0 & 0 & ⋯ & {C}_{n}\end{matrix}\right)$
- building a weighting matrix *W* as follows: $W = {C}^{- 1}$
- building a state innovation vector Δ*x* as follows: $Δ x = {\left({H}^{t}WH\right)}^{- 1} {H}^{t} W \hat{r}$
- computing the combined state estimate *x_{c}* as follows: ${x}_{c} = {x}_{0} + Δ x ;$
- constructing a combined vector of a *posteriori* residuals *r_{c}* as follows: ${r}_{c} = \hat{r} - H ⋅ Δ x$ and,
- computing the protection level *PL* for the combined state estimate *x_{c}* using the combined observation matrix *H,* the combined vector of a *posteriori* residuals *r_{c}* and the weighting matrix *W.*

2. The method of claim 1, wherein the initial guess *p*₀ is obtained as an average of two or more of the position estimates *p*₁, *p*₂, *... , pₙ* from the several positioning sources *S*₁, *S*₂ ... , *Sₙ*.

3. The method of claim 1, wherein the initial guess *p*₀ is obtained as the position estimate of one positioning source *Sₖ*.

4. The method of claim 1, wherein the initial guess *p*₀ is arbitrarily selected in the vicinity of at least one of the position estimates provided by one of the positioning sources *S₁, S₂, ... , Sₙ.*

5. The method of any one of claims 1-4, wherein the positioning source *Sₖ* can be any of GNSS positioning, terrestrial 5G/6G positioning, satellite-based 5G/6G positioning, LEO-PNT positioning, LEO positioning based on signals of opportunity, R-mode positioning or any combination thereof.

6. The method of any one of claims 1-5, wherein at least one of the positioning sources *S*₁*, S*₂*,* ... , *Sₙ* is GNSS, and at least one of the positioning sources *S*₁, *S*₂, ... , *Sₙ* is different from GNSS.

7. The method of any one of claims 1-6, further comprising comparing the computed protection level *PL* against a preestablished threshold value, and preferably, raising an alarm if the computed protection level *PL* is above the preestablished threshold.

8. A device (200, 200') comprising a processor (202) configured to carry out the method of any one of the preceding claims.

9. The device (200') of claim 8, further comprising a GNSS receiver (206).

10. The device (200, 200') of any of claims 8-9, wherein the processor is further configured to compare the computed protection level *PL* against a preestablished threshold value.

11. The device of claim 10, wherein an alarm is raised if the computed protection level *PL* is above the preestablished threshold.

12. A computer program comprising instructions which, when the program is executed by at least one device (200, 200') with at least one processor (202), cause the at least one device (200, 200') to carry out the steps of the computer-implemented method (100) of any one of claims 1-7.
